# EUROPEAN PATENT SPECIFICATION

(11) **EP 2 295 833 B1**
(45) Date of publication and mention of the grant of the patent: **14.11.2012**
(21) Application number: 10168948.7
(22) Date of filing: 08.07.2010
(51) Int. Cl.: F16H 57/02, F16H 57/04

(54) **Engine unit, and a two-wheeled motor vehicle having the same**
Motoreinheit und zweirädriges Motorfahrzeug damit
Unité de moteur et véhicule motorisé à deux roues doté de celle-ci

(30) Priority: 09.09.2009 JP 2009208123
(43) Date of publication of application: 16.03.2011
(73) Proprietor: Yamaha Hatsudoki Kabushiki Kaisha, Iwata-shi, Shizuoka-ken 438 (JP)
(72) Inventor: Kawakami, Satoshi c/o Yamaha Hatsudoki Kabushiki Kaisha, Shizuoka-ken 438-8501 (JP); Kaminokado, Hiroyuki c/o Yamaha Hatsudoki Kabushiki Kaisha, Shizuoka-ken 438-8501 (JP)
(74) Representative: Stöckeler, Ferdinand

(56) References cited:
- EP-A1- 2 019 233
- JP-A- 4 224 492
- US-A- 4 468 979

## Description

### BACKGROUND OF THE INVENTION

### (1) Field of the Invention

The present invention relates to an engine unit having a belt type Continuous Variable Transmission, and to a two-wheeled motor vehicle having the engine unit.

### (2) Description of the Related Art

Conventionally, an engine unit having a belt type Continuous Variable Transmission includes a transmission chamber housing a reduction mechanism, between a belt chamber housing the belt type Continuous Variable Transmission and a rear wheel. The transmission chamber of the engine unit houses the reduction mechanism which reduces the speed of rotative power transmitted from the belt type Continuous Variable Transmission. The reduction mechanism includes a plurality of gears, and oil is stored in the transmission chamber for reducing friction of the gears. When the gears in the transmission chamber rotate with rotation of an engine, the temperature in the transmission chamber will increase due to the frictional heat of the gears. This temperature increase raises pressure in the transmission chamber. Thus, a breather tube is connected to the transmission chamber for releasing the high pressure.

The gas (air) flowing from the transmission chamber into the breather tube contains oil vaporized by the temperature increase in the transmission chamber, or misty oil. The breather tube has also a function to carry out gas-liquid separation of the vaporized oil or misty oil. The gas containing the oil is cooled in the course of flow through the breather tube, and liquefied oil adheres to the wall surface of the breather tube.

When the rotation of the engine is stopped, the rotation of the gears in the transmission chamber will also stop, which lowers the temperature in the transmission chamber. When the temperature falls, the pressure in the transmission chamber will lower, resulting in a negative pressure. This draws air from the breather tube into the transmission chamber. Consequently, where one end of the breather tube is open to the atmosphere in a relatively low position inward of the rear wheel, there is a possibility that muddy water, earth dust and the like thrown up by the rear wheel are drawn into the transmission chamber. Thus, a construction has been proposed in JP2007132413 which can prevent muddy water and earth dust from entering the transmission chamber while securing a sufficient cooling effect.

A breather structure described in JP2007132413 includes a breather tube communicating with an upper portion of a transmission chamber of an engine unit and extending forward along an upper portion of a belt chamber of the engine unit. Further, a distal end of the breather tube is held by an air cleaner disposed above the engine unit, and opens upward.

US 4468979 A discloses an engine unit according to the preamble of claim1, comprising a breather ventilation system of a power transmission casing for use in a motorcycle. A breather passage is provided to perform breathing function for both two casings, one being a first casing housing therein a power-transmission means and the other being a second casing housing therein a gear-transmission mechanism. The breather passage is defined between interfacing surfaces of a main body and a cover those providing the second casing. A gasket is interposed between the main body and the cover so as to devide the breather passage into two passages. The breather passage has one end formed with a first breather hole opened to an atmosphere and the other end formed with a second breather hole opened to an interior of said second casing. The breather passage is further formed with a branch passage at the position rearward from said second breather hole to permit liquid communication between an interior of the first casing and the atmosphere.

### SUMMARY OF THE INVENTION

The present invention has been made having regard to the state of the art noted above, and its object is to provide an engine unit which secures a sufficient cooling effect, and inhibits muddy water and earth dust from entering a transmission chamber, while reducing impediments caused by a breather tube formed outside cases of the engine unit, and a two-wheeled motor vehicle having such engine unit.

To fulfill the above object, the present invention provides an engine unit according to claim 1.

According to the present invention, the engine unit includes a belt chamber disposed adjacent the engine axially of the crankshaft and housing a belt type Continuous Variable Transmission for transmitting rotation of the crankshaft, and a transmission chamber disposed rearward of the engine and adjacent a rear portion of the belt chamber, housing a reduction mechanism for transmitting power from the belt type Continuous Variable Transmission to a rear wheel, and storing oil inside. The belt type Continuous Variable Transmission is mounted inside the belt chamber.

Further, the belt chamber has a breather passage formed therein, located rearward of the front end of the transmission chamber as seen axially of the crankshaft, and communicating with the transmission chamber. The breather passage and belt type Continuous Variable Transmission are divided by a partition member in the belt chamber.

The belt chamber includes an intake port for introducing air into the belt chamber, and an exhaust port for discharging air from the belt chamber. The air in the belt chamber is circulated by rotation of the V-belt. Consequently, the belt type Continuous Variable Transmission is cooled by the circulating air, whereby its durability is secured. The belt chamber is constructed to inhibit its interior from being subjected to high temperature.

With the engine unit according to the present invention, the construction for cooling the belt chamber can cool the breather passage formed in the belt chamber, thereby cooling the breather passage efficiently. The breather passage formed in the belt chamber has a high degree of freedom for capacity. The breather passage with an increased space can be cooled with improved efficiency. Since the breather passage is formed in the belt chamber, muddy water, earth dust and the like can be inhibited from entering the transmission chamber communicating with the breather passage.

Further, since the breather passage is located rearward of the front end of the transmission chamber as seen axially of the crankshaft, the breather passage in the belt chamber and the transmission chamber can be arranged close to each other. Consequently, the breather passage in the belt chamber and the transmission chamber can communicate with each other through a short distance. Even if a breather tube disposed outside the engine unit is used for connecting the breather passage and transmission chamber, the breather tube disposed outside the engine unit can be shortened.

The breather passage and belt type Continuous Variable Transmission are divided by the partition member in the belt chamber. The oil cooled and liquefied in the breather passage is inhibited by the partition member from falling on the belt type Continuous Variable Transmission. Consequently, even if the breather passage is formed in the belt chamber, there is little possibility of impairing the function of the belt type Continuous Variable Transmission.

As noted above, while the breather tube disposed outside the cases of the engine unit is shortened, a sufficient cooling performance is obtained, and muddy water and earth dust are inhibited from entering the transmission chamber. In addition, the possibility of the breather tube being caught by the rider, vegetation and so on may be reduced or avoided. Further, this may be achieved without a complicated structure which would be required when fixing the breather tube to the engine unit.

### BRIEF DESCRIPTION OF THE DRAWINGS

For the purpose of illustrating the invention, there are shown in the drawings several forms which are presently preferred, it being understood, however, that the invention is not limited to the precise arrangement and instrumentalities shown.
Fig. 1 is a side view showing an outline construction of a two-wheeled motor vehicle according to Embodiment 1;
Fig. 2 is a schematic left side view of an engine unit according to Embodiment 1;
Fig. 3 is a schematic cross section of the engine unit taken on line III-III of Fig. 2;
Fig. 4 is a left side view of an outer case according to Embodiment 1;
Fig. 5 is a front view of a transmission chamber according to Embodiment 1;
Fig. 6 is a side view of an inner case adjacent the transmission chamber according to Embodiment 1;
Fig. 7 is a perspective view of a rear portion of the engine unit according to Embodiment 1;
Fig. 8 is a left side view of a gasket held between joint surfaces of the inner case and outer case according to Embodiment 1;
Fig. 9 is an enlarged view of a rear end portion of a belt chamber and adjacent components shown in Fig. 3;
Fig. 10 is a side view of the outer case seen from joint surfaces of a crankcase and the outer case according to Embodiment 1;
Fig. 11 is an enlarged view of a rear end portion of a belt chamber and adjacent components according to Embodiment 2;
Fig. 12 is a side view of an inner case adjacent a transmission chamber according to Embodiment 2;
Fig. 13 is a sectional view of rear end portions of the inner case and an outer case according to Embodiment 2;
Fig. 14 is a left side view of an outer case according to a modification; and
Fig. 15 is a schematic cross section of an engine unit according to the modification.

### DESCRIPTION OF THE PREFERRED EMBODIMENTS

Preferred embodiments of the present invention will be described in detail hereinafter with reference to the drawings.

### Embodiment 1

A scooter type two-wheeled motor vehicle will be described as an example of two-wheeled motor vehicle having an engine unit according to Embodiment 1. In the following description, the front, rear, right and left are based on a traveling direction of the two-wheeled motor vehicle.

### 1. Outline Construction of Two-Wheeled Motor Vehicle

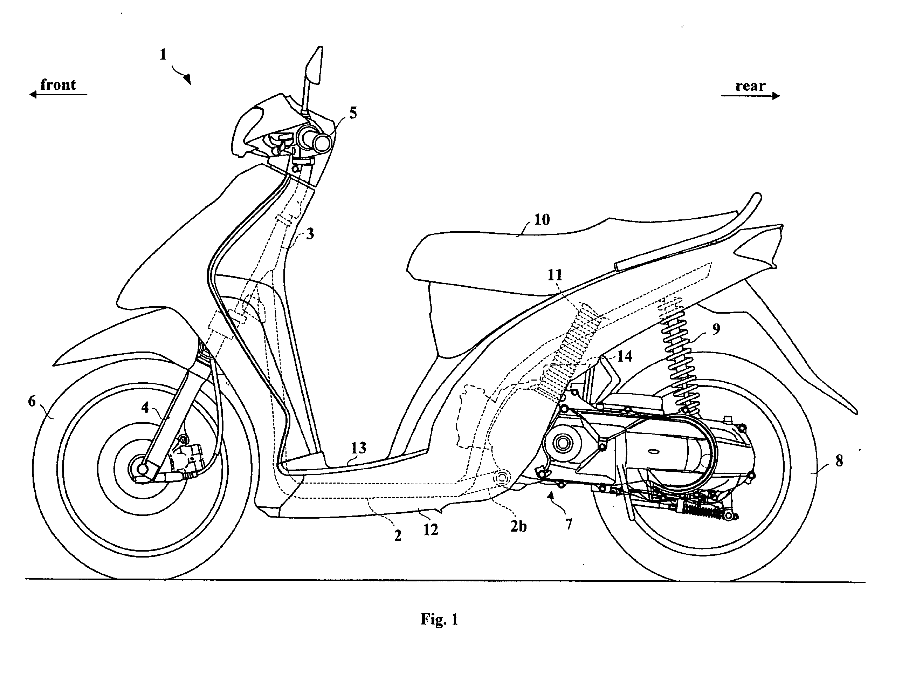

Fig. 1 is a side view showing an outline construction of two-wheeled motor vehicle 1 according to Embodiment 1. The two-wheeled motor vehicle 1 includes a body frame 2 of what is called the underbone type. A head pipe 3 is disposed on an upper front portion of the body frame 2. The head pipe 3 supports a front fork 4 to be rockable right and left. A handlebar 5 is connected to the upper end of the front fork 4. The front fork 4 is rocked by operation of the handlebar 5. A front wheel 6 is rotatably attached to lower ends of the front fork 4.

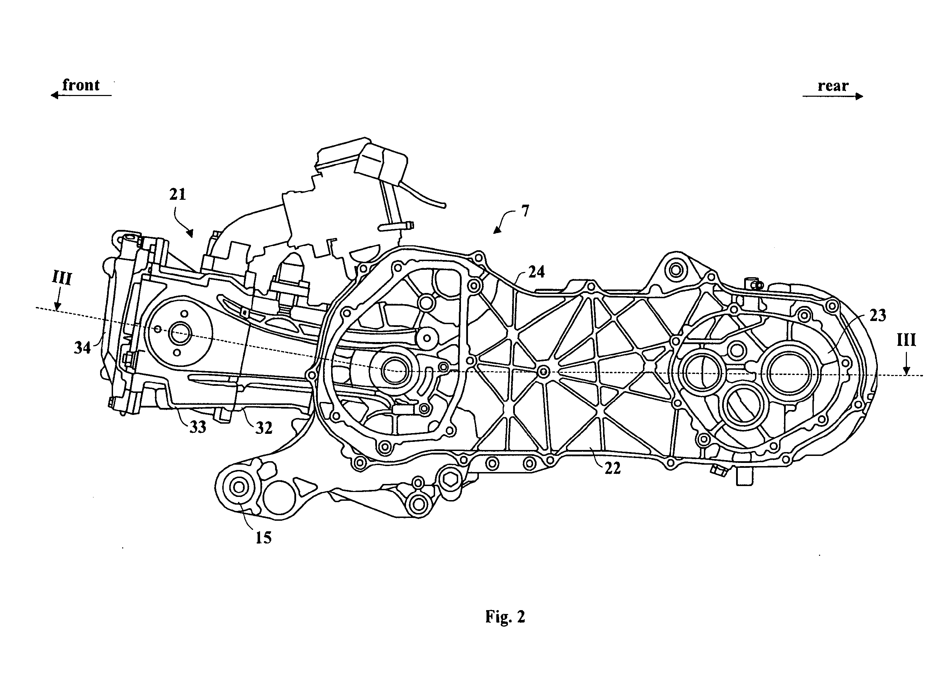

An engine unit support 15 (see Fig. 2) for the engine unit 7 is rockably attached to a bracket 2b provided centrally of the body frame 2. That is, the engine unit 7 is a unit swing engine. A rear wheel 8 is rotatably supported by a rear portion of the engine unit 7. A rear cushion 9 is disposed between a rear portion of the body frame 2 and the engine unit 7 for buffering rocking of the engine unit 7. A seat 10 is provided above the engine unit 7. A duct 11 is disposed on a front lateral portion of the engine unit 7 for taking in ambient air. The body frame 2 is covered by a body cover 12.

The duct 11 opens above the engine unit 7 and inside the body cover 12. The opening of the duct 11 may be disposed anywhere inside the body cover 12.

The opening may be disposed in any position that can inhibit entry to the duct 11 of muddy water and earth dust thrown up by the front wheel 6 or rear wheel 8. For example, the opening may be located inside the body cover 12 and below a rear portion of the seat 10, or below a foot board 13 between the front wheel 6 and rear wheel 8. Further, the opening may be located inside the vehicle body cover 12 and rearward of the front wheel 6, or inside the body cover 12 and above the front wheel 6.

A rear portion of the engine unit 7 is located laterally of the rear wheel 8. That is, the rear portion of the engine unit 7 is located in a position overlapping the rear wheel 8 when seen from a side. The body cover 12 located between the engine unit 7 and seat 10, when seen from a side, extends rearward and upward of the engine unit 7. The rear wheel 8 is disposed below the body cover 12. The rear portion of the engine unit 7 is exposed outside. An air cleaner 14 is disposed above the engine unit 7 and forward of the rear wheel 8.

### 2. Construction of Engine Unit

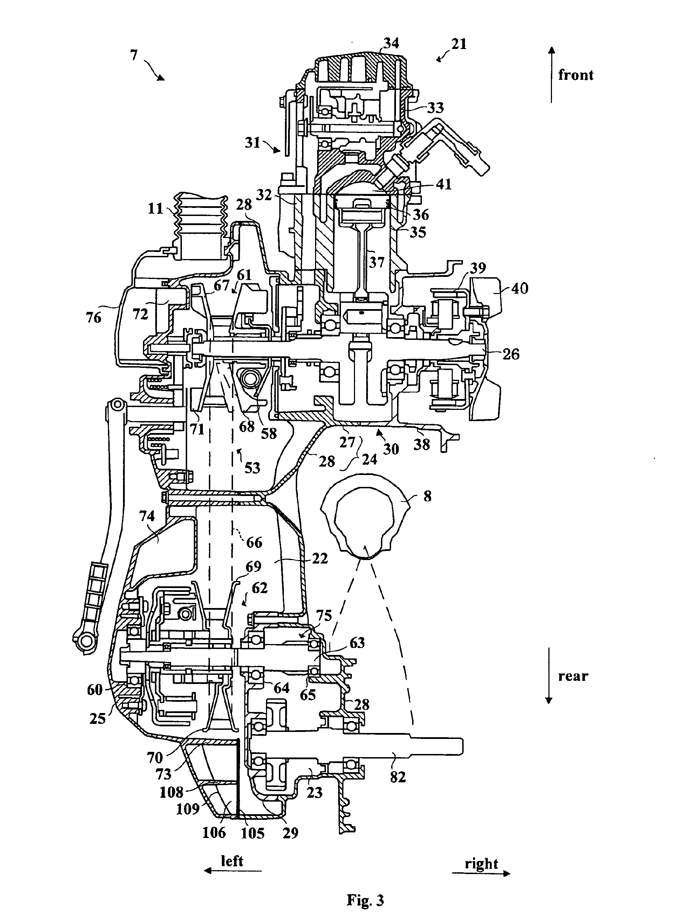

The construction of engine unit 7 provided for the two-wheeled motor vehicle will be described with reference to Figs. 2 and 3. Fig. 2 is a schematic left side view of the engine unit 7, with an outer cover and a belt type Continuous Variable Transmission removed. Fig. 3 is a schematic cross section of the engine unit 7 taken on line III-III of Fig. 2 and including the outer cover and belt type Continuous Variable Transmission.

The engine unit 7 includes an engine 21, a belt chamber 22 disposed leftward and rearward of the engine 21, and a transmission chamber 23 disposed rightward and rearward of the belt chamber 22.

The engine unit 7 includes also a crankcase 24 opening right and left, and an outer case 25 connected to a left portion of the crankcase 24 and butt-connected to an outer peripheral surface of the crankcase 24. The crankcase 24 is an integral formation of a left crankcase 27 housing part of a crankshaft 26, and an inner case 28 connected to a peripheral abutting surface of the outer case 25.

The engine unit 7 further includes a transmission case 29 disposed between the inner case 28 and outer case 25, and connected to the inner case 28. The connection between the inner case 28 and transmission case 29 is located inward of the connection between the inner case 28 and outer case 25 when seen from a side. The connection between the inner case 28 and transmission case 29 is located closer to a cylinder axis line than is the connection between the inner case 28 and outer case 25 when seen from above.

The engine 21 includes a crank portion 30 and a cylinder portion 31. The crank portion 30 has a right crankcase 38 and the left crankcase 27 forming a front part of the crankcase 24. The crank portion 30 houses a middle region of the crankshaft 26.

The cylinder portion 31 is connected to the front the crank portion 30. The cylinder portion 31 has a cylinder block 32 joined to the front of each of the left crankcase 27 and right crankcase 38, a cylinder head 33 joined to the front of the cylinder block 32, and a cylinder head cover 34 joined to the front of the cylinder head 33.

A cylinder 35 is formed in the cylinder block 32. The cylinder 35 contains a piston 36 reciprocable therein along the cylinder axis. The piston 36 is connected to the crankshaft 26 through a connecting rod 37. A combustion chamber 41 is defined by the cylinder head 33, cylinder 35 and piston 36.

The crankshaft 26 is connected in a rightward position thereof to an alternator 39. A cooling fan 40 is connected to the crankshaft 26 at the right side of the alternator 39.

A left portion of the crankshaft 26 extends from the engine 21 into the belt chamber 22. The belt chamber 22 is defined by the inner case 28, the transmission case 29 joined to the rear of the inner case 28, and the outer case 25 joined to the inner case 28. The belt chamber 22 refers to a space formed at the right side of the outer case 25 and at the left side of the crankcase 24 and transmission case 29. The belt chamber 22 houses a belt type Continuous Variable Transmission (; hereinafter called CVT) 53 for transmitting rotation of the crankshaft 26 extending from the engine 21.

The CVT 53 includes a primary sheave 61, a secondary sheave 62, and a V-belt 66 wound around the primary sheave 61 and secondary sheave 62.

The primary sheave 61 is disposed in a front portion of the belt chamber 22 and supported by one end of the crankshaft 26 in the belt chamber 22. The primary sheave 61 is rotatable with the crankshaft 26. The secondary sheave 62 is disposed in a rear portion of the belt chamber 22 and supported by a driven shaft 63. The driven shaft 63 is disposed parallel to the crankshaft 26. The driven shaft 63 is supported, at the left side of the secondary sheave 62, by the outer case 25 through a bearing 60. The driven shaft 63 is supported, at the right side of the secondary sheave 62, by the transmission case 29 through a bearing 64. The right end of the driven shaft 63 is supported by the inner case 28 through a bearing 65. Rotation of the crankshaft 26 is transmitted to the driven shaft 63 through the primary sheave 61, V-belt 66 and secondary sheave 62.

The primary sheave 61 includes a fixed sheave element 67 located leftward in the transverse direction of the vehicle, i.e. outward in the direction of width of the vehicle with respect to the cylinder axis, and a movable sheave element 68 located rightward in the transverse direction of the vehicle, i.e. inward in the direction of width of the vehicle, to be opposed to the fixed sheave element 67. The fixed sheave element 67 is fixed to the crankshaft 26 to be rotatable with the crankshaft 26. The movable sheave element 68 is disposed rightward of the fixed sheave element 67, and is mounted to be slidable along the crankshaft 26. A roller weight 58 is disposed at the right side of the movable sheave element 68. Thus, the movable sheave element 68 is slidable axially of the crankshaft 26 by rotation of the crankshaft 26, while rotating with the crankshaft 26.

The secondary sheave 62 includes a fixed sheave element 69 located rightward in the transverse direction of the vehicle, and a movable sheave element 70 located leftward in the transverse direction of the vehicle and opposed to the fixed sheave element 69. The movable sheave element 70 is slidable axially of the driven shaft 63 while rotating with the driven shaft 63.

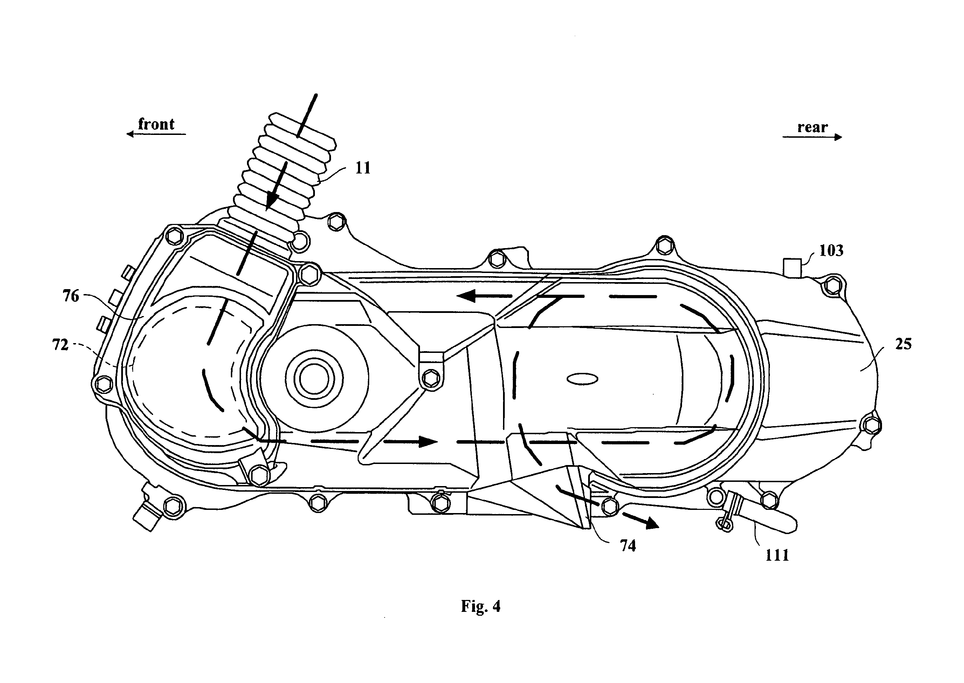

Next, reference is made also to Fig. 4. Fig. 4 is a left side view of the outer case 25. The arrows in Fig. 4 indicate flows of air introduced into the belt chamber 22.

A plurality of fanning blades 71 are formed on a left side of the fixed sheave element 67 of the primary sheave 61. An air intake 72 is formed in the outer case 25 laterally of the primary sheave 61. A feed cover 76 is located to the left of the outer case 25, and arranged to cover an area laterally of the air intake 72. The duct 11 is connected to the feed cover 76. The feed cover 76 guides ambient air introduced through the duct 11 to the air intake 72.

With this construction, when the fixed sheave element 67 rotates with the crankshaft 26, air is drawn by the blades 71 into the belt chamber 22 through the duct 11 and air intake 72. The air drawn in is driven by rotation of the blades 71 and V-belt 66 to flow toward the secondary sheave 62. The air having flowed to the secondary sheave 62 collides with a partition wall 73 extending rightward in the transverse direction of the vehicle from the outer case 25, and rotates with rotation of the driven shaft 63 inside the belt chamber 22. Part of the air in rotation is discharged outside the belt chamber 22 from an exhaust port 74 formed in a lower position of the outer case 25.

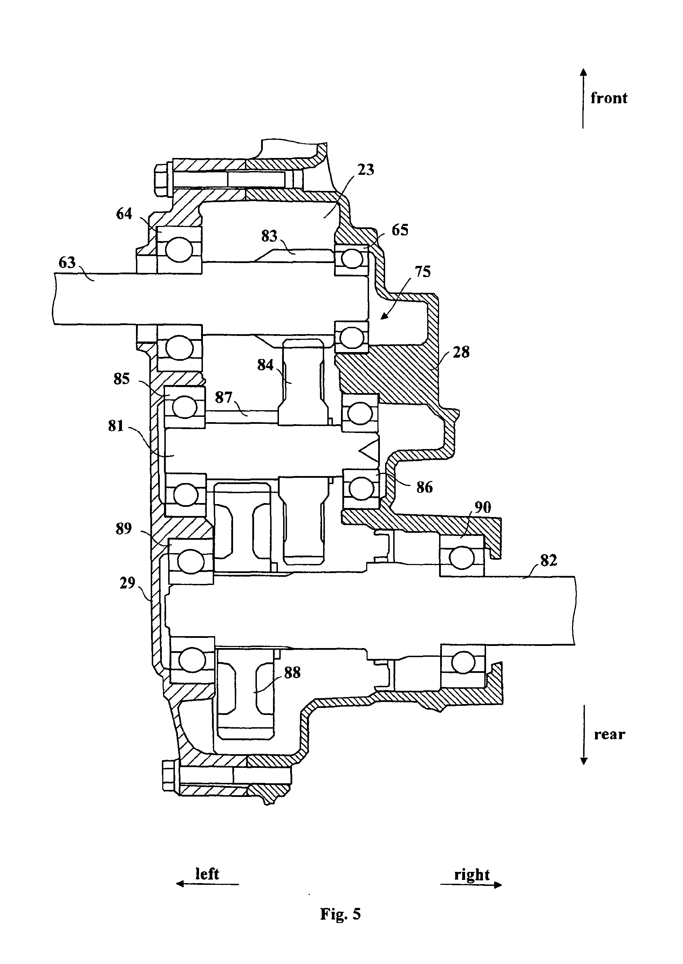

Next, the construction in the transmission chamber 23 will be described with reference to Fig. 5. Fig. 5 is a front view of the transmission chamber 23. The transmission chamber 23 is defined by the rear of inner case 28 and the transmission case 29. The transmission chamber 23 adjoins the belt chamber 22 across the transmission case 29, and stores oil in its interior. The transmission chamber 23 houses a gear reduction mechanism 75.

An intermediate shaft 81 and a rear wheel axle 82 are mounted in the transmission chamber 23 to be parallel to the driven shaft 63. The left end of the intermediate shaft 81 is supported by the transmission case 29 through a bearing 85. The right end of the intermediate shaft 81 is supported by the inner case 28 through a bearing 86. The left end of the rear wheel axle 82 is supported by the transmission case 29 through a bearing 89. A right portion of the rear wheel axle 82 is supported by the inner case 28 through a bearing 90. A first gear 83 provided on the driven shaft 63 and a second gear 84 provided on the intermediate shaft 81 are meshed with each other. A third gear 87 provided on the intermediate shaft 81 and a fourth gear 88 provided on the rear wheel axle 82 are meshed with each other. The gear reduction mechanism 75 is constructed of the driven shaft 63, first gear 83, second gear 84, intermediate shaft 81, third gear 87, fourth gear 88 and rear wheel axle 82.

Parts of the first to fourth gears 83, 84, 87 and 88 constituting the gear reduction mechanism 75 are immersed in the oil stored in a lower portion of the transmission chamber 23 housing the gear reduction mechanism 75. This oil serves as lubricant for the first to fourth gears 83, 84, 87 and 88.

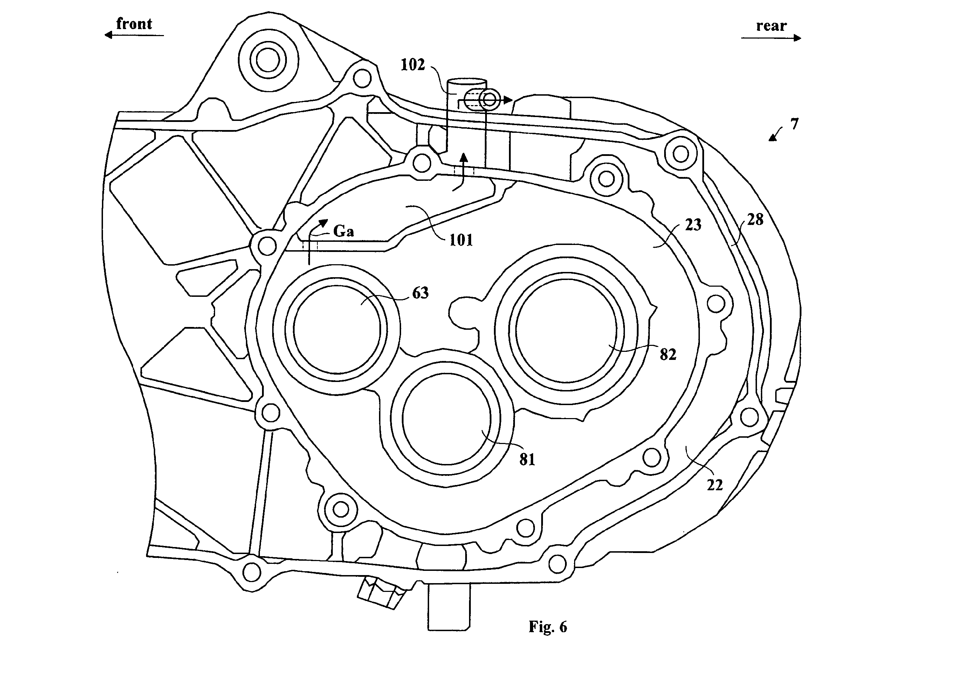

Further, reference is made to Fig. 6. Fig. 6 is a side view of the inner case 28 adjacent the transmission chamber 23.

A passage 101 is formed in an upper portion of the transmission chamber 23 for discharging gas from the transmission chamber 23. A pipe 102 is pressed in from above the inner case 28 to communicate with the passage 101. The pipe 102 has one end thereof located in the transmission chamber 23, and the other end located outside the engine unit 7. A breather tube 104 is connected to the other end of the pipe 102.

Frictional heat is generated with each of the first to fourth gears 83, 84, 87 and 88 in rotation. Such frictional heat raises the temperature of the oil and also the temperature in the transmission chamber 23. The pressure in the transmission chamber 23 increases in response to the temperature increase, which causes gas Ga in the transmission chamber 23 to flow out of the transmission chamber 23 through the passage 101 and pipe 102.

### 3. Construction of Breather Passage

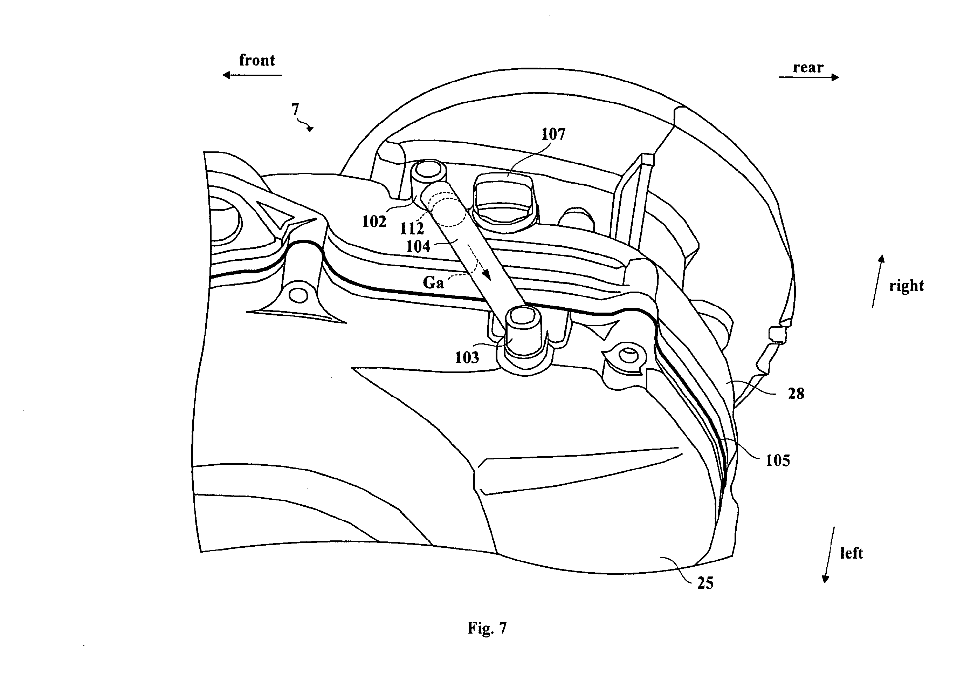

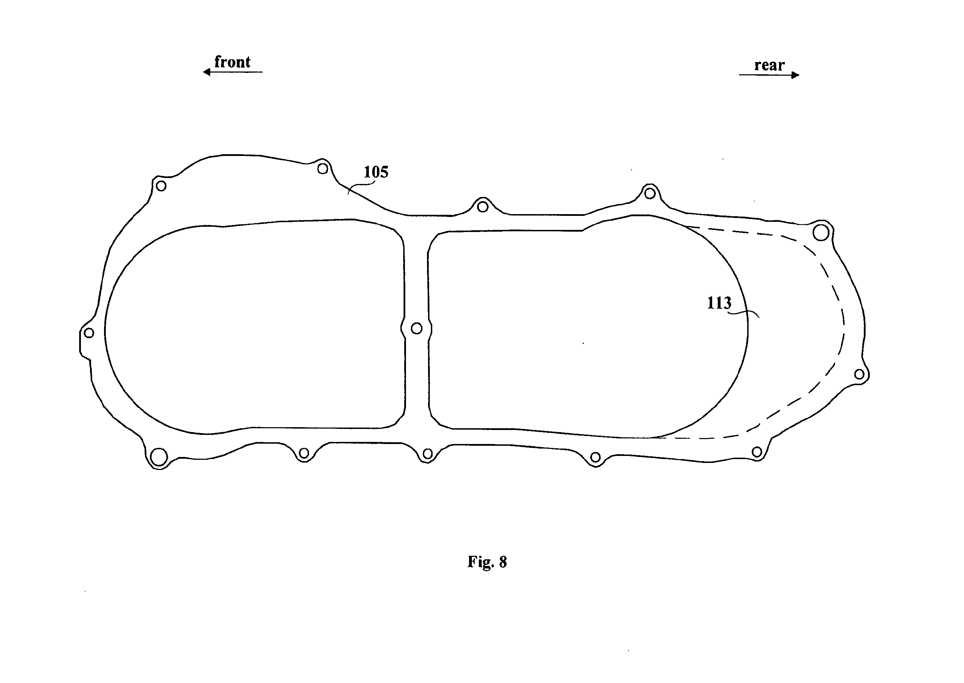

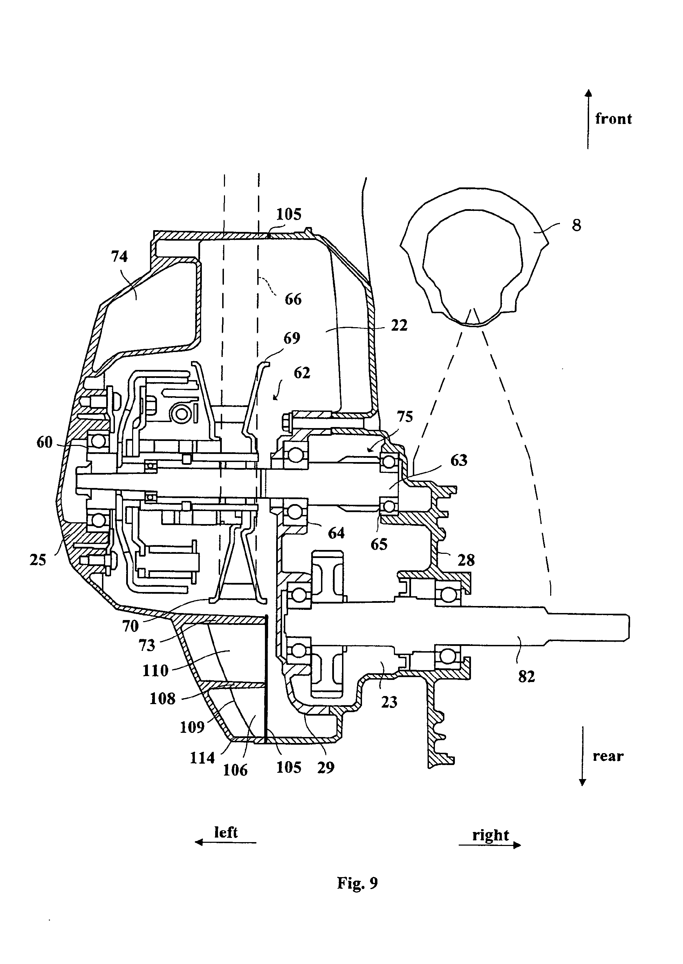

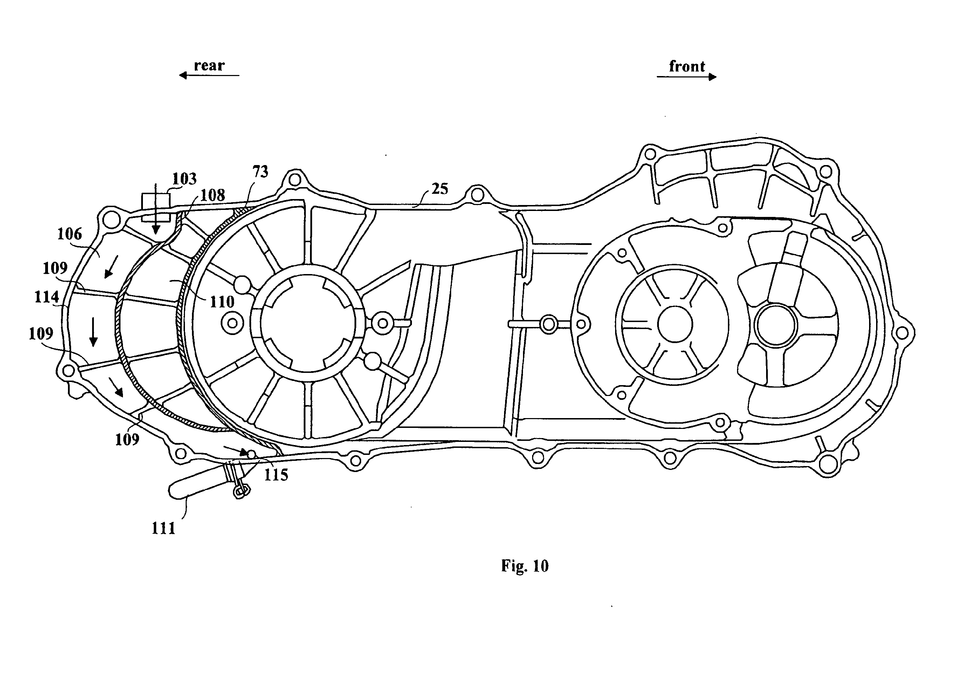

The construction of a breather passage provided in the belt chamber 22 will be described with reference to Figs. 7 to 10. Fig. 7 is a perspective view of a rear portion of the engine unit 7. Fig. 8 is a left side view of a gasket held between joint surfaces of the inner case 28 and outer case 25. Fig. 9 is an enlarged view of a rear end portion of the belt chamber 22 and adjacent components shown in Fig. 3. Fig. 10 is a side view of the outer case 25 seen from joint surfaces of the crankcase 24 and outer case 25.

The pipe 102 provided on the upper portion of the transmission chamber 23 is connected through the breather tube 104 to a pipe 103 pressed into an upper portion of the outer case 25. The pipe 103 penetrates the outer case 25 from outside to inside. One end of the pipe 103 is connected to the breather tube 104. The other end of the pipe 103 is connected to a breather passage 106 defined by the outer case 25 and a gasket 105. Thus, the transmission chamber 23 and breather passage 106 are in communication through the pipe 102, breather tube 104 and pipe 103. The transmission chamber 23 can be replenished with oil through an oil inlet 107.

The breather passage 106 is formed along an inner peripheral surface of a rear portion of the outer case 25. The breather passage 106 is formed rearward of the belt chamber 22. The breather passage 106 is located rearward of the secondary sheave 62. In other words, the breather passage 106 overlaps the secondary sheave 62 when seen from the rear. The breather passage 106 corresponds to the breather passage in the present invention.

The gasket 105 is held between joint surfaces of the inner case 28 and outer case 25. The gasket 105 has a partition portion 113 jutting to a large extent inward from the joint surfaces of the inner case 28 and outer case 25. The partition portion 113 of the gasket 105 is disposed between the transmission case 29 and outer case 25. The gasket 105 has a shape of flat plate, and its material is a thick sheet of paper or rubber.

In the rear of the outer case 25, the partition wall 73 and a partition wall 108 are formed integral with the outer case 25. The partition wall 73 and partition wall 108 extend from an inner surface of the outer case 25 opposed to the inner case 28, toward the interface between the inner case 28 and outer case 25. The partition wall 73 and partition wall 108 extend transversely of the vehicle to the same position as the interface between the outer case 25 and inner case 28. The breather passage 106 is defined by an inner peripheral surface 114 of the rear portion of the outer case 25, partition wall 108 and gasket 105. The outer case 25 has ribs 109 formed therein for increasing rigidity of the outer case 25. A compartment 110 is formed between the breather passage 106 and secondary sheave 62. The compartment 110 is defined by the partition wall 73, partition wall 108, outer case 25 and gasket 105.

The lower end of the breather passage 106 is connected to a transparent drain pipe 111 while communicating with the belt chamber 22. An end of the drain pipe 111 is closed, and therefore oil liquefied in the breather passage 106 collects in the transparent drain pipe 111. The drain pipe 111 corresponds to the drain pipe in the present invention.

### 4. Flow of Gas Containing Oil

Next, the flow of gas Ga containing oil generated in the transmission chamber 23 will be described.

Reference is made to Figs. 6 and 7. The gas Ga containing mist oil generated and oil vaporized in the transmission chamber 23 flows from the passage 101 into the breather tube 104 through the pipe 102 in response to a pressure increase in the transmission chamber 23.

In this process, the oil in large droplets liquefies through collision with wall surfaces of the passage 101, pipe 102 and breather tube 104, and flows back into the transmission chamber 23.

The gas Ga flows into the pipe 102 and breather tube 104, that is, it flows outside the engine unit 7, whereby the gas Ga is cooled by ambient air. With the gas Ga cooled by ambient air, the cooling effect is enhanced to liquefy the vaporized oil efficiently. The liquefied oil flows back into the transmission chamber 23. Preferably, the breather tube 104 is sloped downward from the pipe 103 to the pipe 102. In this case, the oil liquefied within the breather tube 104 easily flows back to the transmission chamber 23.

Reference is made to Figs. 9 and 10. The gas Ga having flowed into the breather tube 104 further flows through the pipe 103 into the breather passage 106 formed in the belt chamber 22. Since the breather passage 106 is isolated from the transmission chamber 23, the heat of the hot transmission chamber 23 is not conducted to the breather passage 106. Further, since the breather passage 106 is formed along the flow of air within the belt chamber 22, the gasket 105 is cooled by the air flowing within the belt chamber 22. Since the breather passage 106 is formed along the inner peripheral surface 114 at the rear end of the outer case 25, the breather passage 106 is cooled by ambient air. Thus, the breather passage 106 is cooled by both the air flowing within the belt chamber 22 and the ambient air which flows outside the inner peripheral surface 114 at the rear end of the outer case 25.

The oil-containing gas Ga having flowed into the breather passage 106, while being cooled, collides with the wall surface of the breather passage 106 and with the ribs 109, whereby the oil is liquefied and adheres to the wall surface and ribs 109. The oil adhering to the wall surface of the breather passage 106 and to the ribs 109 flows down along the breather passage 106, and passes through a passage hole 115 to collect in the drain pipe 111. Thus, the oil contained in the gas Ga having flowed from the transmission chamber 23 can be recovered as liquid from the drain pipe 111 without releasing the oil into the atmosphere.

Since the breather passage 106 is divided by the gasket 105 from the belt chamber 22 housing the secondary sheave 62, the oil liquefied in the breather passage 106 can be prevented from falling on the secondary sheave 62. The compartment 110 formed between the breather passage 106 and secondary sheave 62 can prevent the oil liquefied in the breather passage 106 from falling on the secondary sheave 62 with increased effect.

When rotation of the first to fourth gears 83, 84, 87 and 88 of the gear reduction mechanism 78 stops with stopping of rotation of the crankshaft 26, the temperature in the transmission chamber 23 will fall. Since a negative pressure occurs in the transmission chamber 23 at this cooling time, air flows into the transmission chamber 23. In this case, the air in the belt chamber 22 passes through the breather passage 106, and flows into the transmission chamber 23 through the pipe 103, breather tube 104, pipe 102 and passage 101.

The air in the belt chamber 22 is that drawn in through the duct 11. Since the duct 11 opens within the body cover 12, earth dust thrown up by the rear wheel 8 can hardly be drawn in. Earth dust and the like drawn into the duct 11, if at all, will adsorb to the wall surfaces of the duct 11 and feed cover 76, whereby the earth dust and the like are inhibited from entering the belt chamber 22. Since air flows from the interior to the exterior of the belt chamber 22 through the exhaust port 74, earth dust and the like cannot easily make entry against this flow. Thus, the belt chamber 22 has a construction for inhibiting entry of muddy water and earth dust. Earth dust and the like having entered the belt chamber 22 are discharged by the flow of air within the belt chamber 22 from the belt chamber 22 through the exhaust port 74. The belt chamber 22 is constructed for not easily allowing earth dust and the like to deposit therein.

Consequently, even if air in the belt chamber 22 flows into the transmission chamber 23 via the breather passage 106, earth dust and the like can be prevented from entering the transmission chamber 23. Any earth dust or the like contained in a small amount in the air drawn into the belt chamber 22 will adhere to the wall surface of breather passage 106 and the ribs 109. This also prevents earth dust and the like from entering the transmission chamber 23.

A filter 112 may be provided in the breather tube 104 for capturing earth dust and the like. Since earth dust and the like are removed from the air flowing out of the belt chamber 22, earth dust and the like can be prevented from entering the transmission chamber 23 with increased effect.

According to Embodiment 1, the engine unit 7 includes the belt chamber 22 disposed adjacent the engine 21 in the axial direction of the crankshaft 26 for housing the belt type Continuous Variable Transmission 53 which transmits rotation of the crankshaft 26, and the transmission chamber 23 disposed rearward of the engine 21 and adjacent the rear of the belt chamber 22, housing the gear reduction mechanism 75 for transmitting power from the belt type Continuous Variable Transmission 53 to the rear wheel 8, and storing oil in its interior. The belt type Continuous Variable Transmission 53 is mounted in the belt chamber 22. The gear reduction mechanism 75 corresponds to the reduction mechanism.

Further, the belt chamber 22 has the breather passage 106 formed therein, which is located rearward of the front end of the transmission chamber 23 as seen axially of the crankshaft 26, and is in communication with the transmission chamber 23. The breather passage 106 and belt type Continuous Variable Transmission 53 are divided by the partition member in the belt chamber 22.

The belt chamber 22 has an intake port for introducing air into the belt chamber 22, and an exhaust port for discharging air. The air in the belt chamber 22 is circulated by rotation of the V-belt 66. The air intake 72 corresponds to the intake port, and the exhaust port 74 corresponds to the exhaust port. Consequently, the belt type Continuous Variable Transmission 53 is cooled by the circulating air, whereby its durability is secured. The belt chamber 22 is constructed to inhibit its interior from being subjected to high temperature.

The construction for cooling the belt chamber 22 can cool the breather passage 106 formed in the belt chamber 22, thereby cooling the breather passage 106 efficiently. The breather passage 106 formed in the belt chamber 22 has a high degree of freedom for capacity. The breather passage 106 with an increased space can be cooled with improved efficiency. Since the breather passage 106 is formed in the belt chamber 22, muddy water, earth dust and the like can be inhibited from entering the transmission chamber 23 communicating with the breather passage 106.

Further, since the breather passage 106 is located rearward of the front end of the transmission chamber 23 as seen axially of the crankshaft 26, the breather passage 106 in the belt chamber 22 and the transmission chamber 23 can be arranged close to each other. Consequently, the breather passage 106 in the belt chamber 22 and the transmission chamber 23 can communicate with each other through a short distance. Even if the breather tube 104 disposed outside the engine unit 7 is used for connecting the breather passage 106 and transmission chamber 23, the breather tube 104 disposed outside the engine unit 7 can be shortened.

The breather passage 106 and belt type Continuous Variable Transmission 53 are divided by the partition member in the belt chamber 22. The oil cooled and liquefied in the breather passage 106 is inhibited by the partition member from falling on the belt type Continuous Variable Transmission 53. Consequently, even if the breather passage 106 is formed in the belt chamber 22, there is little possibility of impairing the function of the belt type Continuous Variable Transmission 53.

As noted above, while the breather tube 104 disposed outside the cases of the engine unit 7 is shortened, a sufficient cooling performance is obtained, and muddy water and earth dust are inhibited from entering the transmission chamber 23.

Embodiment 1 provides the outer case 25 and inner case 28 joined to each other to form a space in the interior thereof, the transmission case 29 joined to the inner case 28, dividing the space into the belt chamber 22 and transmission chamber 23, and defining the transmission chamber 23 with the inner case 28, and the seal member disposed between the inner case 28 and outer case 25. The partition member has the partition wall 108 formed integral with the outer case 25, and the seal member. The breather passage 106 is defined by the outer case 25, partition wall 108 and seal member. The gasket 105 corresponds to the seal member.

The breather passage 106 is defined by the seal member disposed between the outer case 25 and inner case 28, the partition wall 108 formed integral with the outer case 25, and the outer case 25. Consequently, the simple structure can provide a sufficient cooling performance, and inhibit muddy water and earth dust from entering the transmission chamber 23.

Air introduced from the intake port into the belt chamber 22 forms a flow of air which flows along the primary sheave 61, secondary sheave 62 and V-belt 66. The breather passage 106 is formed along the flow of air which flows through the interior of the belt chamber 22. With the breather passage 106 formed along the flow of air which flows through the interior of the belt chamber 22, the gas flowing through the interior of the breather passage 106 can be cooled with increased efficiency.

The breather passage 106 is formed along the inner peripheral surface 114 rearward of the belt chamber 22. With the breather passage 106 formed along the inner peripheral surface 114 rearward of the belt chamber 22, the gas flowing through the interior of the breather passage 106 can be cooled efficiently by ambient air through the wall surface rearward of the belt chamber 22.

The breather passage 106 is located rearward of the secondary sheave 62 as seen axially of the crankshaft 26. Consequently, the breather passage 106 is efficiently cooled with rotation of the secondary sheave 62.

The communicating member which provides communication between the transmission chamber 23 and breather passage 106 is provided outside the outer case 25 and inner case 28. The pipe 102, breather tube 104 and pipe 103 correspond to the communicating member. With the breather tube 104 disposed outside both the transmission chamber 23 and belt chamber 22, the gas flowing through the breather tube 104 can be cooled efficiently by ambient air. Consequently, vaporized oil included in the gas flowing through the breather tube 104 can be liquefied efficiently. In this case also, the rider, vegetation and the like are inhibited from getting caught by the communicating member disposed outside because the latter is short.

The drain pipe is provided in communication with the lower end of the breather passage 106, and the other end of the drain pipe is closed. The drain pipe 111 corresponds to the drain pipe. Since the drain pipe is provided in communication with the lower end of the breather passage 106, with the other end of the drain pipe closed, the oil liquefied in the breather passage 106 is not released to the outside, but collects in the drain pipe and can be recovered from there. Consequently, while preventing muddy water and earth dust entering from the drain pipe, the oil liquefied in the breather passage 106 can be withdrawn from the belt chamber 22. With the function of the belt type Continuous Variable Transmission 53 maintained, a sufficient cooling performance is obtained and muddy water, and earth dust are inhibited from entering the transmission chamber 23.

The filter 112 may be mounted in the communicating member. This can prevent earth dust and the like from entering the transmission chamber 23 from the breather passage 106 at a cooling time.

The engine unit 7 is mounted on the two-wheeled motor vehicle 1, with the transmission chamber 23 disposed laterally of the rear wheel 8. The transmission chamber 23 disposed laterally of the rear wheel 8 is located in a relatively low position. Consequently, if the transmission chamber 23 were open to the outside, muddy water and earth dust thrown up by the rear wheel 8 could enter the transmission chamber 23. However, with the engine unit 7 of Embodiment 1 mounted on board, earth dust and the like can be prevented from entering the transmission chamber 23 due to a negative pressure generated at a cooling time, while efficiently cooling the gas flowing from the transmission chamber 23 to the breather passage 106.

The engine unit 7 which is a unit swing engine is supported by the body frame 2 to be rockable about the engine unit support 15 formed in the engine unit 7. The transmission chamber 23 is located laterally of the rear wheel 8, and at a long distance from the engine unit support 15. Consequently, the transmission chamber 23 has a large rocking range. When the breather tube 104 is disposed outside the transmission chamber 23, it is difficult to place the other end different from the one end connected to the transmission chamber 23, in a relatively high position in order not to be caught by the rider or vegetation. On the other hand, with the engine unit 7 of Embodiment 1, the breather tube 104 disposed outside the engine unit 7 can be shortened. Thus, it is desirable to employ the engine unit 7 of the present invention on the two-wheeled motor vehicle 1 having the unit swing engine rockable relative to the body frame 2.

### Embodiment 2

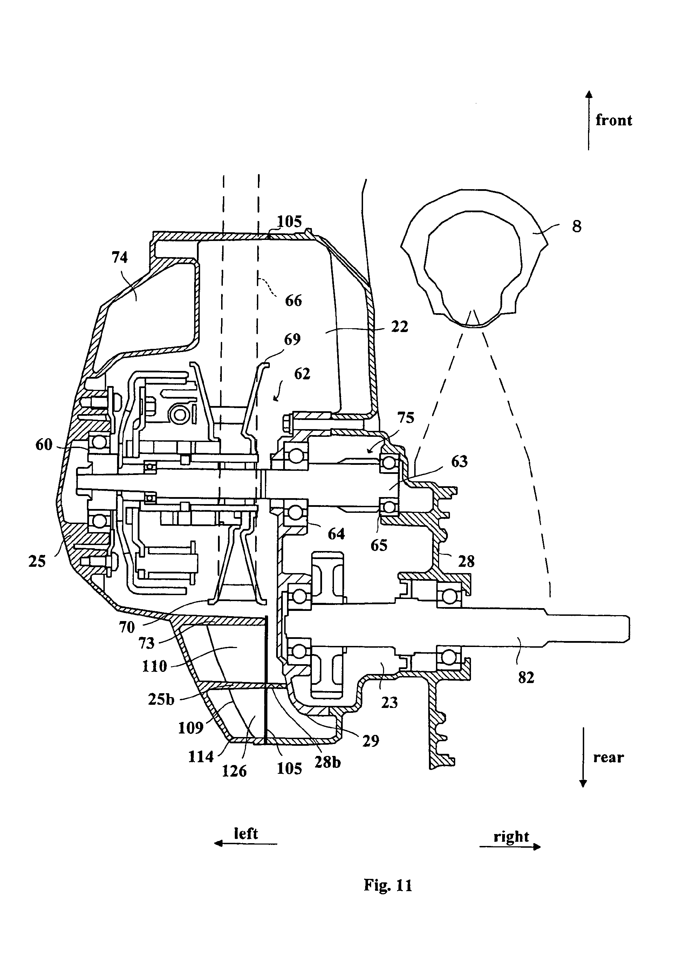

A breather passage according to Embodiment 2 will be described with reference to Figs. 11 to 13.

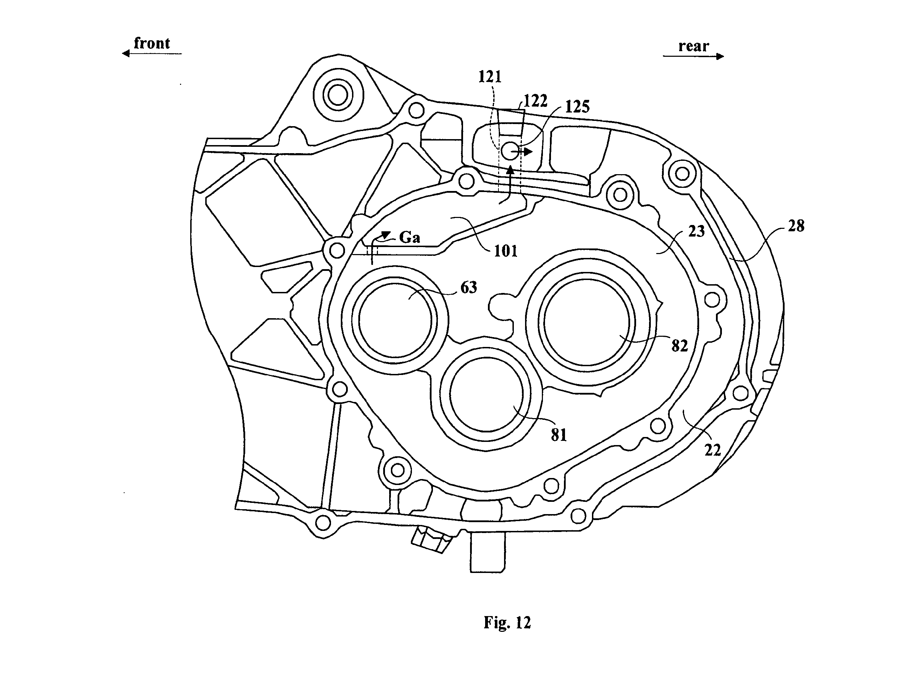

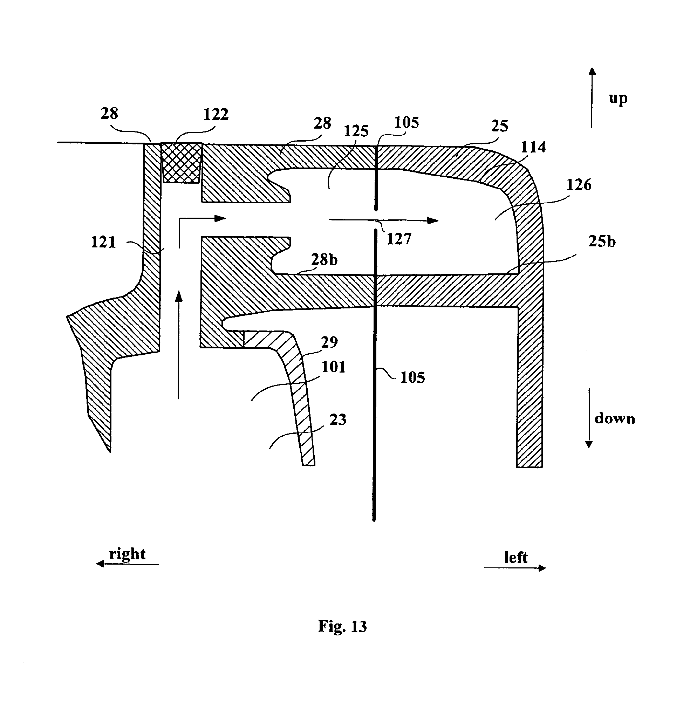

Fig. 11 is an enlarged view of a rear end portion of a belt chamber and adjacent components according to Embodiment 2. Fig. 12 is a side view of an inner case adjacent a transmission chamber according to Embodiment 2. Fig. 13 is a sectional view of rear end portions of the inner case and an outer case according to Embodiment 2. In Figs. 11 to 13, parts shown with the same signs as the signs shown in Embodiment 1 are the same as in Embodiment 1, and will not be described here. Embodiment 2 provides a connection between the transmission chamber and breather passage changed from that in Embodiment 1. Therefore, the constructions of the engine unit and the two-wheeled motor vehicle not described here are the same as in Embodiment 1.

The characteristic feature of Embodiment 2 lies in that communication from the passage 101 of the transmission chamber 23 to the breather passage 106 of the belt chamber 22 takes place inside the inner case 28 and outer case 25. The passage 101 of the transmission chamber 23 communicates with a through-hole 121 formed to extend from an upper portion of the inner case 28 to an upper portion of the transmission chamber 23. A plug 122 is pressed into the upper end of the through-hole 121. A partition wall 28b extending leftward in the transverse direction of the vehicle from the inner case 28 and a partition wall 25b extending rightward in the transverse direction of the vehicle from the outer case 25 are butt-connected through the gasket 105.

The through-hole 121 communicates with a breather passage 125 defined by the partition wall 28b and inner case 28. The breather passage 125 communicates also with a breather passage 126 defined by the outer case 25, partition wall 25b and gasket 105, through a pore 127 formed in the gasket 105. As is the breather passage 106 in Embodiment 1, the breather passage 126 is formed to extend along the inner peripheral surface 114 of the rear portion of the outer case 25.

Since the breather passage 125 and breather passage 126 are in communication inside the inner case 28 and outer case 25 according to Embodiment 2, it is not necessary to form, outside the rear portion of the engine unit 7, the breather tube which cools gas Ga flowing from the transmission chamber 23. Since the number of components projecting from the outer peripheral surface of the engine unit 7 can be reduced, the outward appearance of the two-wheeled motor vehicle 1 can be improved.

Thus, in Embodiment 2, the transmission chamber 23 and the breather passage 126 in the belt chamber 22 communicate with each other inside the outer case 25 and inner case 28. It is more desirable in that the number of components projecting from the outer peripheral surface of the engine unit 7 can be reduced by the direct communication inside the outer case 25 and inner case 28. The gas exiting the transmission chamber 23 can be discharged directly into the breather passage 126 formed in the belt chamber 22. Since the size of the breather passage 126 formed in the belt chamber 22 has a high degree of freedom, cooling performance can be improved easily.

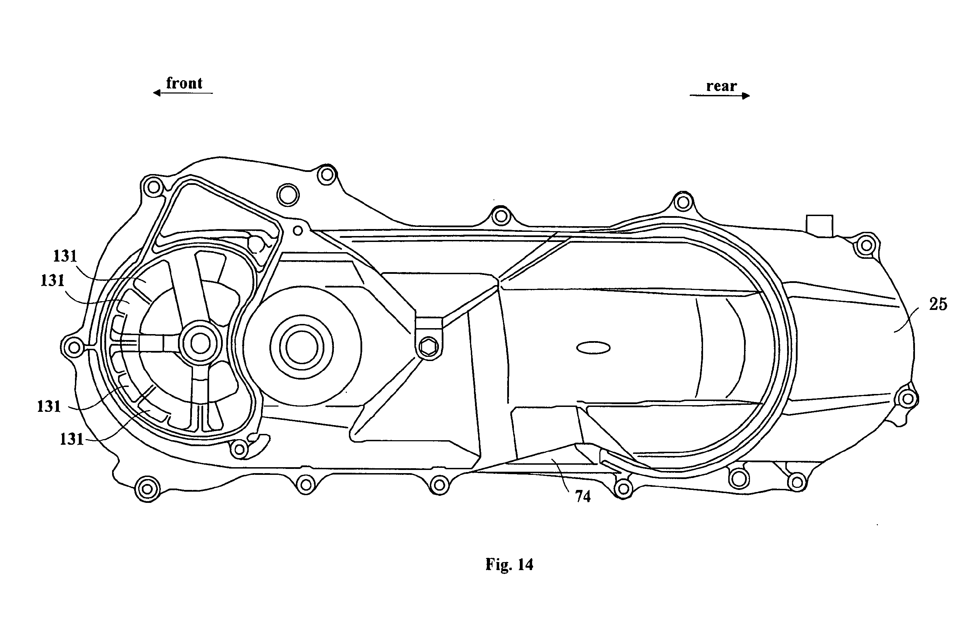

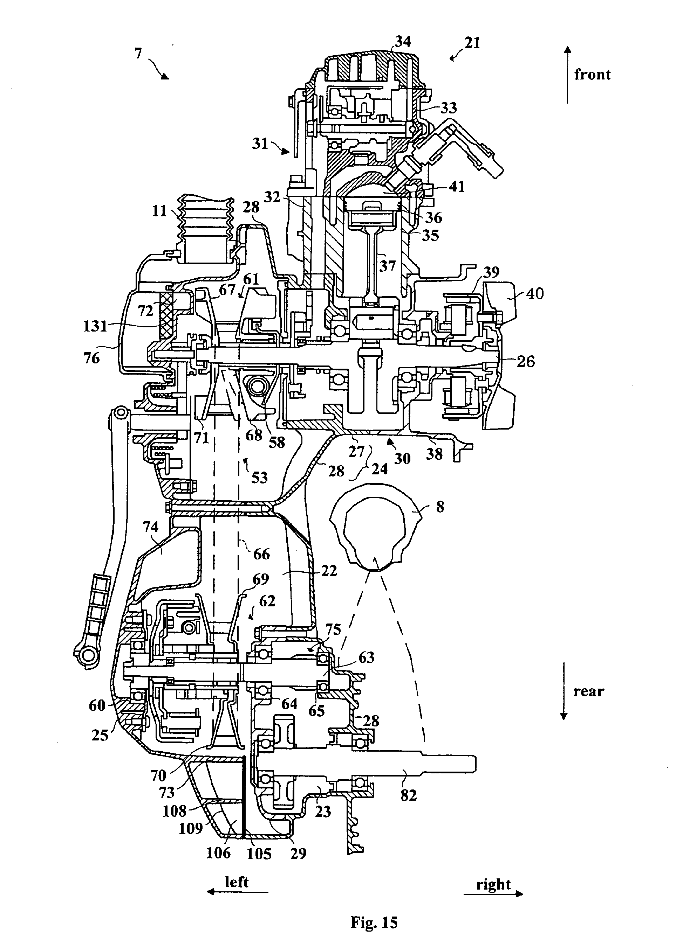

The present invention is not limited to Embodiment 1 or 2, but may be modified as follows:
(1) A filter 131 which adsorbs earth dust and the like may be provided between the air intake 72 and belt chamber 22 as shown in Figs. 14 and 15. Fig. 14 is a left side view showing an outer case with a duct and a feed cover removed therefrom. Fig. 15 is a schematic cross section of an engine unit. Earth dust and the like can be removed from the air flowing into the belt chamber 22.

Thus, earth dust and the like can be removed from the air drawn into the belt chamber 22 by providing a filter 131 for the intake port. Consequently, the belt chamber 22 is filled with air free of earth dust, and earth dust is prevented from entering the transmission chamber 23 at a cooling time with increased effect.
(2) The two-wheeled motor vehicle 1 is not limited to the construction shown in Fig. 1. The invention is applicable to any two-wheeled motor vehicle having an engine of the unit swing type with the CVT 53. For example, the foot board 13 may not be flat. Further, for example, the air cleaner 14 may be located above the belt chamber 22, or above the cylinder portion 31, or may be located forward of the cylinder portion 31 and below the foot board 13.
(3) The transmission chamber 23 and breather passage 106 may only be connected, and the position and method of connection are not limited to Embodiment 1 or Embodiment 2. In Embodiment 1, for example, the pipe 102 may be formed integral with the inner case 28, and the breather tube 104 may be inserted in recesses formed in the inner case 28 and outer case 25.
(4) The position of the breather passage 106 is not limited to the position in the embodiments. The breather passage 106 may have a portion thereof located rearward of the front end of the transmission chamber 23 and formed in the space defined by the outer case 25 and inner case 28. For example, the breather passage 106 may be disposed leftward of the secondary sheave 62 in the transverse direction of the vehicle. Further, for example, the breather passage 106 may be disposed in a position overlapping the secondary sheave 62 when seen from a side.
(5) The partition member between the belt type Continuous Variable Transmission 53 and breather passage 106 is not limited to the gasket 105 in the embodiments. For example, a member separate from the gasket disposed as a seal member between the outer case 25 and inner case 28 may be attached to the partition 108 of the outer case.
(6) In the embodiments, the compartment 110 is formed between the belt type Continuous Variable Transmission 53 and breather passage 106. The breather passage 106 may be formed without the compartment 110. That is, instead of forming the partition wall 108, the breather passage may be defined by the outside cover 25, partition wall 73 and gasket 105. The breather passage with an increased capacity can produce an improved cooling effect.

## Claims

1. An engine unit (7) comprising:
an engine (21) having a crankshaft (26);
a belt chamber (22) disposed adjacent the engine (21) axially of the crankshaft (26) and housing a belt type Continuous Variable Transmission (53) for transmitting rotation of the crankshaft (26); and
a transmission chamber (23) disposed rearward of the engine (21) and adjacent a rear portion of the belt chamber (22), housing a reduction mechanism (75) for transmitting power from the belt type Continuous Variable Transmission (53) to a rear wheel (8), and storing oil inside;
wherein the belt type Continuous Variable Transmission (53) includes:
a primary sheave (61) rotatable with the crankshaft (26); and
a secondary sheave (62) for receiving the power from a V-belt wound thereon and on the primary sheave (61); and
the belt chamber (22) includes:
an intake port (72) for introducing air into the belt chamber (22);
an exhaust port (74) for discharging air from the belt chamber (22);
a breather passage (106; 126) located inside the belt chamber (22) and rearward of a front end of the transmission chamber (23) as seen axially of the crankshaft (26), and communicating with the transmission chamber (23); and
a partition member (105, 108; 25b, 28b) disposed between the breather passage (106; 126) and the belt type Continuous Variable Transmission (53),
wherein the breather passage (106; 126) is located rearward of the secondary sheave (62) as seen axially of the crankshaft (26) **characterized in that** the breather passage (106; 126) overlaps the secondary sheave (62) when seen from the rear.

2. The engine unit (7) according to claim 1, further comprising:
an outer case (25) and an inner case (28) joined to each other to form a space inside;
a transmission case joined to the inner case (28), dividing the space into the belt chamber (22) and the transmission chamber (23), and defining the transmission chamber (23) with the inner case (28); and
a seal member provided between the inner case (28) and the outer case (25);
wherein the partition member (105, 108; 25b, 28b) has a partition wall (108; 25b, 28b) and the seal member, wherein the partition wall (108; 25b, 28b) is formed integral with the outer case (25); and
the breather passage (106; 126) is defined by the outer case (25), the partition wall (108; 25b, 28b) and the seal member (105).

3. The engine unit (7) according to claim 1, wherein:
the air introduced from the intake port (72) forms in the belt chamber (22) a flow of air flowing along the primary sheave (61), the secondary sheave (62) and the V-belt; and
the breather passage (106; 126) is formed along the flow of air in the belt chamber (22).

4. The engine unit (7) according to claim 1, wherein the breather passage (106; 126) is formed along an inner peripheral surface of the rear portion of the belt chamber (22).

5. The engine unit (7) according to claim 1, further comprising a communicating member (102, 103, 104) which is disposed outside the outer case (25) and the inner case (28) and provides communication between the transmission chamber (23) and the breather passage (106).

6. The engine unit (7) according to claim 1, wherein the transmission chamber (23) and the breather passage (126) communicate with each other inside the outer case (25) and the inner case (28).

7. The engine unit (7) according to claim 1, further comprising a drain pipe (111) communicating with a lower end of the breather passage (106; 126), the other end of the drain pipe (111) being closed.

8. The engine unit (7) according to claim 1, wherein the intake port (72) has a filter.

9. The engine unit (7) according to claim 5, wherein the communicating member (102, 103, 104) has a filter.

10. A two-wheeled motor vehicle having the engine unit (7) according to any one of claims 1 to 9.

## Patentansprüche

1. Eine Motoreinheit (7), die folgende Merkmale aufweist:
einen Motor (21) mit einer Kurbelwelle (26);
eine Riemenkammer (22), die neben dem Motor (21) axial zu der Kurbelwelle (26) angeordnet ist, und die ein stufenloses Getriebe (53) vom Riementyp aufnimmt zum Übertragen einer Drehung der Kurbelwelle (16); und
eine Getriebekammer (23), die hinter dem Motor (21) und benachbart zu einem hinteren Teil der Riemenkammer (22) angeordnet ist, die einen Reduktionsmechanismus (75) aufnimmt zum Übertragen einer Leistung von dem stufenlosen Getriebe (53) vom Riementyp zu einem Hinterrad (8), und Öl in sich speichert;
wobei das stufenlose Getriebe (53) vom Riementyp folgende Merkmale aufweist:
eine Primärscheibe (61), die mit der Kurbelwelle (26) drehbar ist; und
eine Sekundärwelle (62) zum Aufnehmen der Leistung von einem V-Riemen, der darauf und auf die Primärscheibe (61) gewickelt ist; und
wobei die Riemenkammer (22) folgende Merkmale aufweist:
ein Aufnahmetor (72) zum Einführen von Luft in die Riemenkammer (22);
ein Auslasstor (74) zum Ablassen von Luft von der Riemenkammer (22);
einen Entlüfterdurchgang (106; 126), der in der Riemenkammer (22) und hinter einem Vorderende der Getriebekammer (23) axial von der Kurbelwelle (26) aus gesehen angeordnet ist, und mit der Übertragungskammer (23) kommuniziert; und
ein Trennbauglied (105, 108; 25b, 28b), das zwischen dem Entlüfterdurchgang (106; 126) und dem stufenlosen Getriebe (53) vom Riementyp angeordnet ist,
wobei der Entlüfterdurchgang (106; 126) hinter der Sekundärscheibe (62) axial von der Kurbelwelle (26) aus gesehen angeordnet ist, **dadurch gekennzeichnet, dass** der Entlüfterdurchgang (106; 126) die Sekundärscheibe (62) von hinten aus gesehen überlappt.

2. Die Motoreinheit (7) gemäß Anspruch 1, die ferner folgende Merkmale aufweist:
ein äußeres Gehäuse (25) und ein inneres Gehäuse (28), die miteinander verbunden sind, um innen einen Raum zu bilden;
ein Getriebegehäuse, das mit dem inneren Gehäuse (28) verbunden ist, und den Raum in der Riemenkammer (22) und der Übertragungskammer (23) unterteilt, und mit dem inneren Gehäuse (28) die Übertragungskammer (23) definiert; und
ein Abdichtungsbauglied, das zwischen dem inneren Gehäuse (28) und dem äußeren Gehäuse (25) vorgesehen ist;
wobei das Trennbauglied (105, 108; 25b, 28b) eine Trennwand (108; 25b, 28b) und das Abdichtungsbauglied aufweist, wobei die Trennwand (108; 25b, 28b) integral mit dem äußeren Gehäuse (25) gebildet ist; und
der Entlüfterdurchgang (106; 126) durch das äußere Gehäuse (25), die Trennwand (108; 25b, 28b) und das Abdichtungsbauglied (105) definiert ist.

3. Die Motoreinheit (7) gemäß Anspruch 1, bei der:
die Luft, die von dem Aufnahmetor (72) eingeführt wird, in der Riemenkammer (22) einen Luftfluss bildet, der entlang der Primärscheibe (61), der Sekundärscheibe (62) und dem V-Riemen fließt; und
der Entlüfterdurchgang (106; 126) entlang dem Luftfluss in der Riemenkammer (22) gebildet ist.

4. Die Motoreinheit (7) gemäß Anspruch 1, bei der der Entlüfterdurchgang (106; 126) entlang einer inneren Umfangsoberfläche des hinteren Abschnitts der Riemenkammer (22) gebildet ist.

5. Die Motoreinheit (7) gemäß Anspruch 1, die ferner ein Kommunikationsbauglied (102, 103, 104) aufweist, das außerhalb des äußeren Gehäuses (25) und des inneren Gehäuses (28) angeordnet ist und Kommunikation zwischen der Übertragungskammer (23) und dem Entlüfterdurchgang (106) bereitstellt.

6. Die Motoreinheit (7) gemäß Anspruch 1, bei der die Getriebekammer (23) und der Entlüfterdurchgang (126) innerhalb des äußeren Gehäuses (25) und des inneren Gehäuses (28) miteinander kommunizieren.

7. Die Motoreinheit (7) gemäß Anspruch 1, die ferner ein Ablassrohr (111) aufweist, das mit einem unteren Ende des Entlüfterdurchgang (106; 126) kommuniziert, wobei das andere Ende des Ablassrohrs (111) geschlossen ist.

8. Die Motoreinheit (7) gemäß Anspruch 1, bei der das Aufnahmetor (72) ein Filter aufweist.

9. Die Motoreinheit (7) gemäß Anspruch 5, bei der das Kommunikationsbauglied (102, 103, 104) ein Filter aufweist.

10. Ein zweirädriges Motorfahrzeug mit der Motoreinheit (7) gemäß einem der Ansprüche 1 bis 9.

## Revendications

1. Unité de moteur (7), comprenant:
un moteur (21) présentant un vilebrequin (26);
une chambre à courroie (22) disposée adjacente au moteur (21) axialement par rapport au vilebrequin (26) et abritant une transmission variable en continu de type courroie (53) destinée à transmettre la rotation du vilebrequin (26); et
une chambre de transmission (23) disposée à l'arrière du moteur (21) et adjacente à une partie arrière de la chambre à courroie (22), abritant un mécanisme de réduction (75) destiné a transmettre la puissance de la transmission variable en continu de type courroie (53) à une roue arrière (8), et contenant de l'huile en son intérieur;
dans laquelle la transmission variable en continue de type courroie (53) comporte:
une réa primaire (61) pouvant tourner avec le vilebrequin (26); et
une réa secondaire (62) destinée à recevoir la puissance de la courroie en V enroulée autour de cette dernière et sur la réa primaire (61); et
la chambre à courroie (22) comporte:
un orifice d'entrée (72) destiné à introduire de l'air dans la chambre à courroie (22);
un orifice d'échappement (74) destiné à évacuer l'air de la chambre à courroie (22);
un passage de ventilation (106; 126) situé à l'intérieur de la chambre à courroie (22) et a l'arrière d'une extrémité avant de la chambre de transmission (23), vu axialement par rapport au vilebrequin (26), et communiquant avec la chambre de transmission (23), et
un élément de cloison (105, 108; 25b, 28b) disposé entre le passage de ventilation (106; 126) et la transmission variable en continu de type courroie (53),
dans laquelle le passage de ventilation (106; 126) est situé à l'arrière de la réa secondaire (62), vu axialement par rapport au vilebrequin (26),
**caractérisée par le fait que** le passage de ventilation (106; 126) vient un recouvrement avec la réa secondaire (62) lorsque vu depuis l'arrière.

2. Unité de moteur (7) selon la revendication 1, comprenant par ailleurs:
un boîtier extérieur (25) et un boîtier intérieur (28) unis l'un à l'autre pour former un espace intérieur;
un boîtier de transmission uni au boîtier interne (28), divisant l'espace en la chambre à courroie (22) et la chambre de transmission (23), et définissant la chambre de transmission (23) avec le boîtier intérieur (28); et
un élément de joint prévu entre le boîtier intérieur (28) et le boîtier extérieur (25);
dans laquelle l'élément de cloison (105, 108, 25b, 28b) présente une paroi de division (108; 25b, 28b) et l'élément de joint, où la paroi de division (108; 25b, 28b) est formée de manière solidaire avec le boîtier extérieur (25); et
le passage de ventilation (106, 126) est défini par le boîtier extérieur (25), la paroi de division (108; 25b, 28b) et l'élément de joint (105).

3. Unité de moteur (7) selon la revendication 1, dans laquelle:
l'air introduit depuis l'orifice d'entrée (72) forme dans la chambre à courroie (22) un flux d'air circulant le long de la réa primaire (61), de la réa secondaire (62) et de la courroie en V, et
le passage de ventilation (106; 126) est formé le long du flux d'air dans la chambre à courroie (22).

4. Unité de moteur (7) selon la revendication 1, dans laquelle le passage de ventilation (106; 126) est formé le long d'une surface périphérique intérieure de la partie arrière de la chambre à courroie (22).

5. Unité de moteur (7) selon la revendication 1, comprenant par ailleurs un élément de communication (102, 103, 104) qui est disposé à l'extérieur du boîtier extérieur (25) et du boîtier intérieur (28) et permet une communication entre la chambre de transmission (23) et le passage de ventilation (106).

6. Unité de moteur (7) selon la revendication 1, dans laquelle la chambre de transmission (23) et le passage de ventilation (126) communiquent entre eux à l'intérieur du boîtier extérieur (25) et du boîtier intérieur (28).

7. Unité de moteur (7) selon la revendication 1, comprenant par ailleurs un tuyau de drainage (111) communiquant avec une extrémité inférieure du passage de ventilation (106; 126), l'autre extrémité de tuyau de drainage (111) étant fermée.

8. Unité de moteur (7) selon la revendication 1, dans laquelle l'orifice d'entrée (72) présente un filtre.

9. Unité de moteur (7) selon la revendication 5, dans laquelle l'élément de communication (102, 103, 104) présente un filtre.

10. Véhicule à moteur à deux roues présentant l'unité de moteur (7) selon l'une quelconque des revendications 1 à 9.
